# EUROPEAN PATENT SPECIFICATION

(11) **EP 2 613 401 B1**
(45) Date of publication and mention of the grant of the patent: **06.04.2016**
(21) Application number: 11821759.5
(22) Date of filing: 30.08.2011
(51) Int. Cl.: H01M 4/60, H01M 2/10, H01M 2/02, H01M 4/90, H01M 4/38, H01M 12/08, H01M 12/06

(54) **METAL-OXYGEN BATTERY**
METALL-SAUERSTOFF-BATTERIE
BATTERIE MÉTAL-OXYGÈNE

(30) Priority: 31.08.2010 JP 2010194283
(43) Date of publication of application: 10.07.2013
(73) Proprietor: Honda Motor Co., Ltd., Minato-ku Tokyo 107-8556 (JP)
(72) Inventor: TANAAMI, Kiyoshi, Wako-shi Saitama 351-0193 (JP); TANIUCHI, Takuya, Wako-shi Saitama 351-0193 (JP); ISOGAI, Yuji, Wako-shi Saitama 351-0193 (JP); YOSHIZAWA, Akihiro, Wako-shi Saitama 351-0193 (JP); KINOSHITA, Tomohiro, Wako-shi Saitama 351-0193 (JP); SAITO, Bunichi, Wako-shi Saitama 351-0193 (JP); SAKAI, Hiroshi, Wako-shi Saitama 351-0193 (JP); NAKADA, Satoshi, Wako-shi Saitama 351-0193 (JP); HORI, Mao, Wako-shi Saitama 351-0193 (JP)
(74) Representative: Weickmann & Weickmann
(86) International application number: PCT/JP2011/069525
(87) International publication number: WO 2012/029743

(56) References cited:
- EP-A1- 1 345 279
- WO-A1-02/075749
- WO-A1-2010/082338
- WO-A1-2011/115176
- JP-A- 2003 288 905
- JP-A- 2008 112 724
- JP-A- 2010 108 622

## Description

### Technical Field

The present invention relates. to a metal oxygen battery.

### Background Art

Metal oxygen batteries are conventionally known which comprise a positive electrode using oxygen as an active substance, a negative electrode using a metal such as zinc or lithium as an active substance, and an electrolyte layer interposed between the positive electrode and the negative electrode (see, for example, Patent Literature 1).

In the metal oxygen batteries, generally during discharge, a cell reaction occurs in which while a metal such as zinc or lithium is oxidized at the negative electrode to form metal ions, oxygen is reduced at the positive electrode to form oxygen ions. During charge, the reverse reactions of the respective cell reactions are caused in the negative electrode and the positive electrode. Consequently, charge and discharge by the cell reactions are carried out.

In the metal oxygen battery disclosed in Patent Literature 1, the positive electrode, the negative electrode, and the electrolyte layer are accommodated in a case, and the positive electrode is opened to an atmosphere via a microporous membrane provided in the case. As such, the metal oxygen battery may act oxygen introduced from air as the active substance in the positive electrode, and may expect improvement of energy density.

However, in the metal oxygen battery, the positive electrode is opened to the atmosphere, so that there is a problem that not only oxygen but also moisture, carbon dioxide and the like in the air penetrates into the battery. When the moisture, carbon dioxide and the like penetrates into the cell reaction with discharge occurs in the positive electrode, deterioration or evaporation of electrolyte occurs in the electrolyte layer, and deterioration of metal occurs in the negative electrode, so that a performance of the battery drops.

In order to solve the above-mentioned problem, a metal oxygen battery in which the positive electrode, the negative electrode, and the electrolyte layer are hermetically accommodated in the case is being proposed (see, for example, Patent Literature 2).

In the metal oxygen battery disclosed in Patent Literature 2, the positive electrode, the negative electrode, and the electrolyte layer are accommodated in the case, the case is hermetically sealed by a lid member, the lid member is provided with a light transmission window for transmitting light, and an oxygen-occluding material which releases oxygen by receiving light is provided between the positive electrode and the light transmission window. As the oxygen-occluding material, a manganese complex containing oxygen, such as an oxocubane-type manganese complex, and a manganese dipicolinate complex, are used.

According to the above-mentioned metal oxygen battery, the problem arising from the moisture and carbon dioxide and the like in the air penetrating into the battery may be solved, since the positive electrode, the negative electrode, and the electrolyte layer are hermetically sealed in the case. Further, according to the above-mentioned metal oxygen battery, charge and discharge may be performed by making the oxygen-occluding material to release oxygen by the light beam entering from the light transmission window, and introducing the oxygen to the positive electrode.

### Citation List

### Patent Literature

Patent Literature 1: Japanese Patent Laid-Open No. 2008-181853
Patent Literature 2: Japanese Patent Laid-Open No. 2009-230985

### Summary of Invention

### Technical Problem

However, in the metal oxygen battery disclosed in Patent Literature 2, there is an inconvenience that the supply of oxygen becomes unstable and sufficient charge and discharge cannot be performed, when light beam does not enter.

Therefore, the present invention aims at providing a metal oxygen battery which is capable of eliminating such inconvenience, and which is capable of performing charge and discharge by supplying oxygen stably, without letting the moisture and carbon dioxide and the like in the air from entering the battery, and without relying on light beam.

### Solution to Problem

In order to achieve this object, the present invention provides a metal oxygen battery, including: a positive electrode to which oxygen is applied as an active substance; a negative electrode to which a metal is applied as an active substance; an electrolyte layer disposed between the positive electrode and the negative electrode; and a case hermetically housing the positive electrode, the negative electrode and the electrolyte layer, wherein the positive electrode includes and includes an oxygen-storing material comprising a catalyst function with respect to a cell reaction, and a function of, during discharge, ionizing oxygen and binding the oxygen with metal ions transferring from the negative electrode through the electrolyte layer to the positive electrode to thereby form a metal oxide, and during charge, reducing the metal oxide and storing oxygen.

According to the metal oxygen battery of the present invention, it becomes possible to prevent the moisture and carbon dioxide and the like in the air from entering the battery, since the positive electrode, the negative electrode, and the electrolyte layer are hermetically housed in the case. Further, in the metal oxygen battery of the present invention, the positive electrode itself contains the oxygen-storing material, and the oxygen-storing material has a function of catalyst function with respect to a cell reaction, and, during discharge, ionizing oxygen and binding the oxygen with metal ions transferring from the negative electrode through the electrolyte layer to the positive electrode to thereby form a metal oxide, and during charge, reducing the metal oxide and storing oxygen. Therefore, the positive electrode is capable of ionizing oxygen during discharge and releasing oxygen during charge, in the state of being hermetically housed, and without receiving light beam. Therefore, according to the metal oxygen battery of the present invention, it becomes possible to supply oxygen and perform charge and discharge stably without relying on light beam.

In the metal oxygen battery of the present invention, the oxygen-storing material is a material capable of occluding and releasing oxygen, and as well as capable of adsorbing and desorbing oxygen to and from the surface thereof. There is no need for oxygen, which is adsorbed and desorbed to and from the surface of the oxygen-storing material, to be dispersed within the oxygen-storing material to be occluded and released from the oxygen-storing material, so that the same may be used for the cell reaction with lower energy than oxygen occluded and released from the oxygen-storing material. Therefore, the same may be acted more favorably.

In the metal oxygen battery according to the present invention, as the oxygen-storing material, a composite metal oxide can be used. The composite metal oxide can be in the range of 5 to 95% by mass of the whole of the positive electrode.

In the metal oxygen battery according to the present invention, for the positive electrode, a material having an electron conductivity itself may be used as the oxygen-storing material, but a constitution may be used which comprises the oxygen-storing material and a conductive auxiliary having an electron conductivity.

In the metal oxygen battery according to the present invention, at the positive electrode, oxygen is ionized and stored as the metal oxide during discharge, and the metal oxide is reduced to thereby form oxygen during charge. Therefore, the positive electrode is equipped with a void for accommodating the metal oxide and oxygen, and preferably comprises a porous body having a porosity of 10 to 90% by volume.

The positive electrode, with the porosity lower than 10% by volume, cannot sufficiently accommodate the metal oxide and oxygen, and cannot provide a desired electromotive force in some cases. The positive electrode, with the porosity exceeding 90% by volume, exhibits insufficient strength in some cases.

In the metal oxygen battery according to the present invention, the negative electrode preferably comprises one metal selected from the group consisting of Li, Zn, Al, Mg, Fe, Ca, and Na, an alloy thereof, an organometallic compound containing the metal or an organic complex of the metal. Any of the metal, the alloy, the organometallic compound and the organic complex acts as an active substance in the negative electrode.

### Brief Description of Drawings

[Fig. 1] An illustrative cross-sectional diagram showing one constitution example of the metal oxygen battery according to the present invention.
[Fig. 2]A graph showing relationships between the cell voltage and the capacity during discharge of the metal oxygen batteries according to the present invention using various types of oxygen-storing materials
[Fig. 3]A graph showing relationships between the cell voltage and the capacity during charge of the metal oxygen batteries according to the present invention using various types of oxygen-storing materials.
[Fig. 4]An illustrative cross-sectional diagram showing one constitution example of a conventional metal oxygen battery
[Fig. 5]A graph showing relationships between the cell voltage and the capacity during discharge of the metal oxygen battery according to the present invention using metallic zinc for the negative electrode.
[Fig. 6]A graph showing relationships between the cell voltage and the capacity during discharge of the metal oxygen battery according to the present invention using metallic iron for the negative electrode.
[Fig. 7]A graph showing relationships between the cell voltage and the capacity during discharge of the metal oxygen battery according to the present invention using a Li-In alloy or Si having Li ions intercalated therein in advance for the negative electrode.
[Fig. 8]A graph showing relationships between the cell voltage and the capacity during charge of the metal oxygen battery according to the present invention using a Li-In alloy or Si having Li ions intercalated therein in advance for the negative electrode.
[Fig. 9]A graph showing relationships between the cell voltage and the capacity during discharge of the metal oxygen battery according to the present invention using Li₄Ti₅O₁₂ for the negative electrode.
[Fig. 10] A graph showing relationships between the cell voltage and the capacity during charge of the metal oxygen battery according to the present invention using Li₄Ti₅O₁₂ for the negative electrode.
[Fig. 11] A graph showing relationships between the cell voltage and the capacity during discharge of the metal oxygen batteries according to the present invention the porosity of whose positive electrode is varied.
[Fig. 12] A graph showing relationships between the cell voltage and the capacity during charge of the metal oxygen batteries according to the present invention the porosity of whose positive electrode is varied.
[Fig. 13] A graph showing relationships between the cell voltage and the capacity during discharge of the metal oxygen batteries according to the present invention which use YMnO₃, the amount of which is varied, as an oxygen-storing material.
[Fig. 14] A graph showing relationships between the cell voltage and the capacity during charge of the metal oxygen batteries according to the present invention which use YMnO₃, the amount of which is varied, as an oxygen-storing material.
[Fig. 15] A graph showing relationships between the cell voltage and the capacity during discharge of the metal oxygen batteries according to the present invention using various types of nonaqueous solvents as a solvent for an electrolyte solution.
[Fig. 16] A graph showing relationships between the cell voltage and the capacity during charge of the metal oxygen batteries according to the present invention using various types of nonaqueous solvents as a solvent for an electrolyte solution

### Description of Embodiments

Then, embodiments according to the present invention will be described in more detail by reference to accompanying drawings.

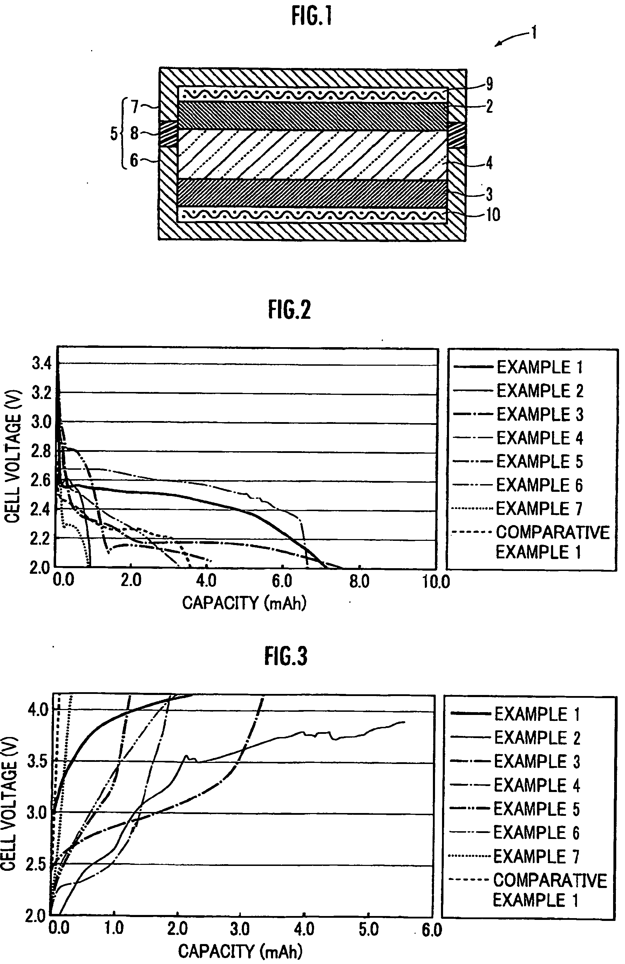

As shown in Fig. 1, a metal oxygen battery 1 according to the present embodiment comprises a positive electrode 2 to which oxygen is applied as an active substance, a negative electrode 3 to which a metal is applied as an active substance, and an electrolyte layer 4 disposed between the positive electrode 2 and the negative electrode 3; and the positive electrode 2, the negative electrode 3 and the electrolyte layer 4 are hermetically housed in a case 5.

The case 5 comprises a cup-form case body 6 and a lid body 7 to cover the case body 6; and an insulating resin 8 is interposed between the case body 6 and the lid body 7. The positive electrode 2 has a positive electrode current collector 9 between the positive electrode 2 and the top surface of the lid body 7; and the negative electrode 3 has a negative electrode current collector 10 between the negative electrode 3 and the bottom surface of the case body 6.

In the metal oxygen battery 1, the positive electrode 2 contains an oxygen-storing material. The oxygen-storing material is a material having a catalytic function for the cell reaction in the positive electrode 2, and having the functions of, during discharge, ionizing oxygen, binding the ionized oxygen with metal ions migrating from the negative electrode 3 through the electrolyte layer 4 to the positive electrode 2 to form a metal oxide, and during charge, reducing the metal oxide, and storing oxygen.

Such an oxygen-storing material usable is, for example, a composite metal oxide having any structure of the hexagonal structure, the C-rare earth structure, the apatite structure, the delafossite structure, the fluorite structure, and the perovskite structure.

Examples of the composite metal oxide having the hexagonal structure include YMnO₃. Examples of the composite metal oxide having the C-rare earth structure include (Gd_{0.70}Y_{0.26}Ba_{0.04})O_{2.96}. Examples of the composite metal oxide having the apatite structure include La_{9.33}Si₆O₂₆ and La_{8.33}SrSiO_{25.5}.

Examples of the composite metal oxide having the delafossite structure include CuFeO₂, CuAlO₂, CuCrO₂ and CuYO₂. Examples of the metal oxide having the fluorite structure include ZrO₂ and CeO₂. Examples of the composite metal oxide having the perovskite structure include LaMnO₃, SrMnO₃ and SrFeO₃.

The composite metal oxide, in order to act as the oxygen-storing material, has preferably an oxygen storing/releasing capability of 100 mmol or more of oxygen, and preferably 500 mmol or more, per 1 mol of the composite metal oxide. The oxygen storing/releasing capability of the composite metal oxide can be evaluated, for example, by a temperature programmed desorption (TPD) measurement.

The composite metal oxide has, as a catalytic function for the cell reaction, preferably an average overvoltage ΔV during discharge of 1.1 V or lower, and more preferably 0.7 V or lower. The composite metal oxide has, as a catalytic function for the cell reaction, preferably an average overvoltage ΔV during charge of 1.5 V or lower, and more preferably 1.1 V or lower.

The positive electrode 2 has preferably an electron conductivity of 10⁻⁷ S/m or higher, and more preferably 1.0 S/m or higher.

The composite metal oxide can be, for example, in the range of 5 to 95% by mass of the whole of the positive electrode 2.

For the positive electrode 2, in order to have an electron conductivity in the above range, a material having an electron conductivity itself may be used as the oxygen-storing material, but a constitution may be used which comprises the oxygen-storing material and a conductive auxiliary having an electron conductivity. The positive electrode 2, in the case of containing the oxygen-storing material and the conductive auxiliary, further contains a binder to bind these.

Examples of the conductive auxiliary include carbonaceous materials such as graphite, acetylene black, Ketjen black, carbon nanotubes, mesoporous carbon and carbon fibers. Examples of the binder include polytetrafluoroethylene (PTFE) and polyvinylidene fluoride (PVDF).

The positive electrode 2 preferably comprises a porous body having a porosity of 10 to 90% by volume, in order to accommodate a metal oxide being a reaction product of oxygen which the oxygen-storing material ionizes during discharge, and oxygen which the oxygen-storing material releases by the reduction of the metal oxide during charge.

In the metal oxygen battery 1, the negative electrode 3 contains one metal selected from the group consisting of Li, Zn, Al, Mg, Fe, Ca, and Na, an alloy thereof, an organometallic compound containing the metal, or an organic complex of the metal.

Examples of the alloy of the metal include a Li-In alloy, a Li-Al alloy, a Li-Mg alloy and a Li-Ca alloy. Examples of the organometallic compound containing the metal include Li₂₂Si₅ and Li₄Ti₅O₁₂.

In the metal oxygen battery 1, the electrolyte layer 4 comprises, for example, a separator which is impregnated with an electrolyte solution in which a salt of a metal used in the negative electrode 3 is dissolved in a nonaqueous solvent.

Examples of the nonaqueous solvent include a carbonate-based solvent, an etheric solvent and an ionic liquid. Examples of the carbonate-based solvent include ethylene carbonate, propylene carbonate, dimethyl carbonate and diethyl carbonate.
The carbonate-based solvent may be used singly or as a mixture of two or more. As the carbonate-based solvent, for example, propylene carbonate may be used singly; a mixed solution of 30 to 70 parts by mass of propylene carbonate and 30 to 70 parts by mass of dimethyl carbonate or diethyl carbonate may be used; and a mixed solution of 30 to 70 parts by mass of ethylene carbonate and 30 to 70 parts by mass of dimethyl carbonate or diethyl carbonate may be used.

Examples of the etheric solvent include dimethoxyethane, dimethyltriglyme and polyethylene glycol. The etheric solvent may be used singly or as a mixture of two or more.

The ionic liquid is a salt of a cation and an anion, which is in the melt state at normal temperature. Examples of the cation include imidazolium, ammonium, pyridinium and piperidinium. Examples of the anion include bis(trifluoromethylsulfonyl)imide (TTSI), bis(pentafluoroethylsulfonyl)imide (BETI), tetrafluoroborate, perchlorate and a halogen anion.

Examples of the separator include glass fibers, glass papers, polypropylene-made nonwoven fabrics, polyimide-made nonwoven fabrics, polyphenylene sulfide-made nonwoven fabrics and polyethylene porous films.

As the electrolyte layer 4, a fused salt or a solid electrolyte may be used as it is. Examples of the solid electrolyte include an oxide-based one and a sulfide one. Examples of the oxide-based solid electrolyte include Li₇La₃Zr₂O₁₂, which is a composite metal oxide of Li, La and Zr, a composite metal oxide in which a part of the former composite metal oxide is substituted with at least one metal selected from the group consisting of Sr, Ba, Ag, Y, Bi, Pb, Sn, Sb, Hf, Ta and Nb, and a glass ceramic containing Li, Al, Si, Ti, Ge and P as main components.

In the metal oxygen battery 1, the positive electrode current collector 9 usable is, for example, a metal mesh comprising Ti, Ni, stainless steel or the like. The negative electrode current collector 10 usable is a metal plate or a metal mesh comprising Ti, Ni, Cu, Al, stainless steel or the like, or a carbon paper.

In the metal oxygen battery 1, since the positive electrode 2, the negative electrode 3, the electrolyte layer 4, the positive electrode current collector 9 and the negative electrode current collector 10 are hermetically housed in the case 5, moisture, carbon dioxide and the like in the air can be prevented from penetrating into the metal oxygen battery 1.

In the metal oxygen battery 1, during discharge, the cell reaction occurs in which while the metal is oxidized to form metal ions at the negative electrode 3, oxygen desorbed from the composite metal oxide is reduced to form oxygen ions in the positive electrode 2. The oxygen is reduced by a catalytic function of the composite metal oxide itself. At the positive electrode 2, oxygen ions also are released from the composite metal oxide. The oxygen ions combine with the metal ions to form a metal oxide, and the metal oxide is accommodated in the pores in the positive electrode 2.

During charge, at the positive electrode 2, the metal oxide is reduced by the catalytic function of the composite metal oxide itself, and oxygen is released; and the oxygen is accommodated in the pores in the positive electrode 2, and thereafter adsorbed on the composite metal oxide, or occluded as oxygen ions in the composite metal oxide. On the other hand, at the negative electrode 3, the metal ions are reduced to form a metal.

As a result, in the metal oxygen battery 1, oxygen may be supplied stably without relying on light beam, and is capable of performing charge and discharge by the cell reaction.

Then, Examples and Comparative Examples of the present invention will be described.

### Examples

### [Example 1]

In the present Example, first, yttrium nitrate pentahydrate, manganese nitrate hexahydrate and malic acid in a molar ratio of 1:1:6 were crushed and mixed to thereby obtain a mixture of composite metal oxide materials. Then, the obtained mixture of composite metal oxide materials was caused to react at a temperature of 250°C for 30 min, and thereafter further caused to react at a temperature of 300°C for 30 min, and at a temperature of 350°C for 1 hour. Then, a mixture of the reaction products was crushed and mixed, and thereafter fired at a temperature of 1,000°C for 1 hour to thereby obtain a composite metal oxide.

The obtained composite metal oxide was confirmed to be a composite metal oxide represented by the chemical formula YMnO₃, and have a hexagonal structure by the X-ray diffraction pattern.

Then, 10 parts by mass of the obtained YMnO₃, 80 parts by mass of Ketjen black (made by Lion Corp.) as a conductive auxiliary, and 10 parts by mass of a polytetrafluoroethylene (made by Daikin Industries, Ltd.) as a binder were mixed to thereby obtain a positive electrode material mixture. Then, the obtained positive electrode material mixture was pressure bonded at a pressure of 5 MPa to a positive electrode current collector 9 composed of a Ti mesh of 15 mm in diameter to thereby form a positive electrode 2 of 15 mm in diameter and 1 mm in thickness. The positive electrode 2 thus obtained was confirmed to have a porosity of 78% by volume by the mercury intrusion method.

Then, a negative electrode current collector 10 composed of a stainless steel of 15 mm in diameter was disposed inside a stainless steel-made case body 6 of a bottomed cylinder-form of 15 mm in inner diameter; and a negative electrode 3 composed of metallic lithium of 15 mm in diameter and 0.1 mm in thickness was superposed on the negative electrode current collector 10.

Then, a separator composed of a glass fiber (made by Nippon Sheet Glass Co., Ltd.) of 15 mm in diameter was superposed on the negative electrode 3. Then, the positive electrode 2 and the positive electrode current collector 9 obtained as described above were superposed on the separator so that the positive electrode 2 contacted with the separator. Then, a nonaqueous electrolyte solution was injected into the separator to thereby form an electrolyte layer 4.

As the nonaqueous electrolyte solution, a solution (made by Kishida Chemical Co., Ltd.) was used in which lithium hexafluorophosphate (LiPF₆) as a supporting salt was dissolved in a concentration of 1 mol/l in a mixed solution of 50 parts by mass of ethylene carbonate and 50 parts by mass of diethyl carbonate.

Then, a laminate body composed of the negative electrode current collector 10, the negative electrode 3, the electrolyte layer 4, the positive electrode 2 and the positive electrode current collector 9 housed in the case body 6 was covered with a lid body 7. At this time, a ring-form insulating resin 8 composed of a polytetrafluoroethylene (PTFE) of 32 mm in outer diameter, 30 mm in inner diameter and 5 mm in thickness was disposed between the case body 6 and the lid body 7; thus, a metal oxygen battery 1 shown in Fig. 1 was obtained.

Then, the metal oxygen battery 1 obtained in the present Example was mounted on an electrochemical measurement apparatus (made by Toho Technical Research Co., Ltd.); and a current of 0.3 mA/cm² was impressed between the negative electrode 3 and the positive electrode 2 to carry out the discharge until the cell voltage reached 2.0 V, and a relationship between the cell voltage and the capacity during discharge was measured. The result is shown in Fig. 2.

Then, the metal oxygen battery 1 obtained in the present Example was mounted on an electrochemical measurement apparatus (made by Toho Technical Research Co., Ltd.); and a current of 0.3 mA/cm² was impressed between the negative electrode 3 and the positive electrode 2 to carry out the charge until the cell voltage reached 4.0 V, and a relationship between the cell voltage and the capacity during charge was measured. The result is shown in Fig. 3.

### [Example 2]

In the present Example, first, copper sulfate, iron nitrate and malic acid in a molar ratio of 1:1:6 were crushed and mixed to thereby obtain a mixture of composite metal oxide materials. Then, the obtained mixture of composite metal oxide materials was caused to react at a temperature of 250°C for 30 min, and thereafter further caused to react at a temperature of 300°C for 30 min, and at a temperature of 350°C for 1 hour. Then, a mixture of the reaction products was crushed and mixed, and thereafter fired at a temperature of 1,200°C for 1 hour to thereby obtain a composite metal oxide.

The obtained composite metal oxide was confirmed to be a composite metal oxide represented by the chemical formula CuFeO₂, and have a delafossite structure by the X-ray diffraction pattern.

Then, a metal oxygen battery 1 shown in Fig. 1 was obtained wholly as in Example 1, except for using the CuFeO₂ obtained in the present Example, and using an aluminum mesh for the positive electrode current collector 9.

Then, a relationship between the cell voltage and the capacity during discharge was measured wholly as in Example 1, except for using the metal oxygen battery 1 obtained in the present Example. The result is shown in Fig. 2.

Then, a relationship between the cell voltage and the capacity during charge was measured wholly as in Example 1, except for using the metal oxygen battery 1 obtained in the present Example, and carrying out the charge until the cell voltage reached 4.1 V. The result is shown in Fig. 3.

### [Example 3]

In the present Example, first, zirconium oxynitrate was fired at a temperature of 800°C for 1 hour to thereby obtain a metal oxide. The obtained metal oxide was confirmed to be a metal oxide represented by the chemical formula ZrO₂, and have a fluorite structure by the X-ray diffraction pattern.

Then, a metal oxygen battery 1 shown in Fig. 1 was obtained wholly as in Example 1, except for using the ZrO₂ obtained in the present Example, and using an aluminum mesh for the positive electrode current collector 9.

Then, a relationship between the cell voltage and the capacity during discharge was measured wholly as in Example 1, except for using the metal oxygen battery 1 obtained in the present Example. The result is shown in Fig. 2.

Then, a relationship between the cell voltage and the capacity during charge was measured wholly as in Example 1, except for using the metal oxygen battery 1 obtained in the present Example, and carrying out the charge until the cell voltage reached 4.1 V. The result is shown in Fig. 3.

### [Example 4]

In the present Example, first, cerium nitrate was fired at a temperature of 600°C for 1 hour to thereby obtain a metal oxide. The obtained metal oxide was confirmed to be a metal oxide represented by the chemical formula CueO₂, and have a fluorite structure by the X-ray diffraction pattern.

Then, a metal oxygen battery 1 shown in Fig. 1 was obtained wholly as in Example 1, except for using the CeO₂ obtained in the present Example and using an aluminum mesh for the positive electrode current collector 9.

Then, a relationship between the cell voltage and the capacity during discharge was measured wholly as in Example 1, except for using the metal oxygen battery 1 obtained in the present Example. The result is shown in Fig. 2.

Then, a relationship between the cell voltage and the capacity during charge was measured wholly as in Example 1, except for using the metal oxygen battery 1 obtained in the present Example, and carrying out the charge until the cell voltage reached 4.1 V. The result is shown in Fig. 3.

### [Example 5]

In the present Example, first, lanthanum nitrate, manganese nitrate and malic acid in a molar ratio of 1:1:6 were crushed and mixed to thereby obtain a mixture of composite metal oxide materials. Then, the obtained mixture of composite metal oxide materials was caused to react at a temperature of 250°C for 30 min, and thereafter further caused to react at a temperature of 300°C for 30 min, and at a temperature of 350°C for 1 hour. Then, a mixture of the reaction products was crushed and mixed, and thereafter fired at a temperature of 1,000°C for 1 hour to thereby obtain a composite metal oxide.

The obtained composite metal oxide was confirmed to be a composite metal oxide represented by the chemical formula LaMnO₃, and have a perovskite structure by the X-ray diffraction pattern.

Then, a metal oxygen battery 1 shown in Fig. 1 was obtained wholly as in Example 1, except for using the LaMnO₃ obtained in the present Example, and using an aluminum mesh for the positive electrode current collector 9.

Then, a relationship between the cell voltage and the capacity during discharge was measured wholly as in Example 1, except for using the metal oxygen battery 1 obtained in the present Example. The result is shown in Fig. 2.

Then, a relationship between the cell voltage and the capacity during charge was measured wholly as in Example 1, except for using the metal oxygen battery 1 obtained in the present Example, and carrying out the charge until the cell voltage reached 4.1 V.

The result is shown in Fig. 3.

### [Example 6] [comparative]

In the present Example, first, lanthanum nitrate, nickel nitrate and malic acid in a molar ratio of 1:1:6 were crushed and mixed to thereby obtain a mixture of composite metal oxide materials. Then, the obtained mixture of composite metal oxide materials was caused to react at a temperature of 250°C for 30 min, and thereafter further caused to react at a temperature of 300°C for 30 min, and at a temperature of 350°C for 1 hour. Then, a mixture of the reaction products was crushed and mixed, and thereafter fired at a temperature of 1,000°C for 1 hour to thereby obtain a composite metal oxide.

The obtained composite metal oxide was confirmed to be a composite metal oxide represented by the chemical formula LaNiO₃, and have a perovskite structure by the X-ray diffraction pattern.

Then, a metal oxygen battery 1 shown in Fig. 1 was obtained wholly as in Example 1, except for using the LaNiO₃ obtained in the present Example, and using an aluminum mesh for the positive electrode current collector 9.

Then, a relationship between the cell voltage and the capacity during discharge was measured wholly as in Example 1, except for using the metal oxygen battery 1 obtained in the present Example. The result is shown in Fig. 2.

Then, a relationship between the cell voltage and the capacity during charge was measured wholly as in Example 1, except for using the metal oxygen battery 1 obtained in the present Example, and carrying out the charge until the cell voltage reached 4.1 V. The result is shown in Fig. 3.

### [Example 7]

In the present Example, first, lanthanum nitrate, silicon oxide and malic acid in a molar ratio of 1:1:6 were crushed and mixed to thereby obtain a mixture of composite metal oxide materials. Then, the obtained mixture of composite metal oxide materials was caused to react at a temperature of 250°C for 30 min, and thereafter further caused to react at a temperature of 300°C for 30 min, and at a temperature of 350°C for 1 hour. Then, a mixture of the reaction products was crushed and mixed, and thereafter fired at a temperature of 1,000°C for 1 hour to thereby obtain a composite metal oxide.

The obtained composite metal oxide was confirmed to be a composite metal oxide represented by the chemical formula LaSiO₃, and have a perovskite structure by the X-ray diffraction pattern.

Then, a metal oxygen battery 1 shown in Fig. 1 was obtained wholly as in Example 1, except for using the LaSiO₃ obtained in the present Example, and using an aluminum mesh for the positive electrode current collector 9.

Then, a relationship between the cell voltage and the capacity during discharge was measured wholly as in Example 1, except for using the metal oxygen battery 1 obtained in the present Example. The result is shown in Fig. 2.

Then, a relationship between the cell voltage and the capacity during charge was measured wholly as in Example 1, except for using the metal oxygen battery 1 obtained in the present Example, and carrying out the charge until the cell voltage reached 4.1 V. The result is shown in Fig. 3.

### [Comparative Example 1]

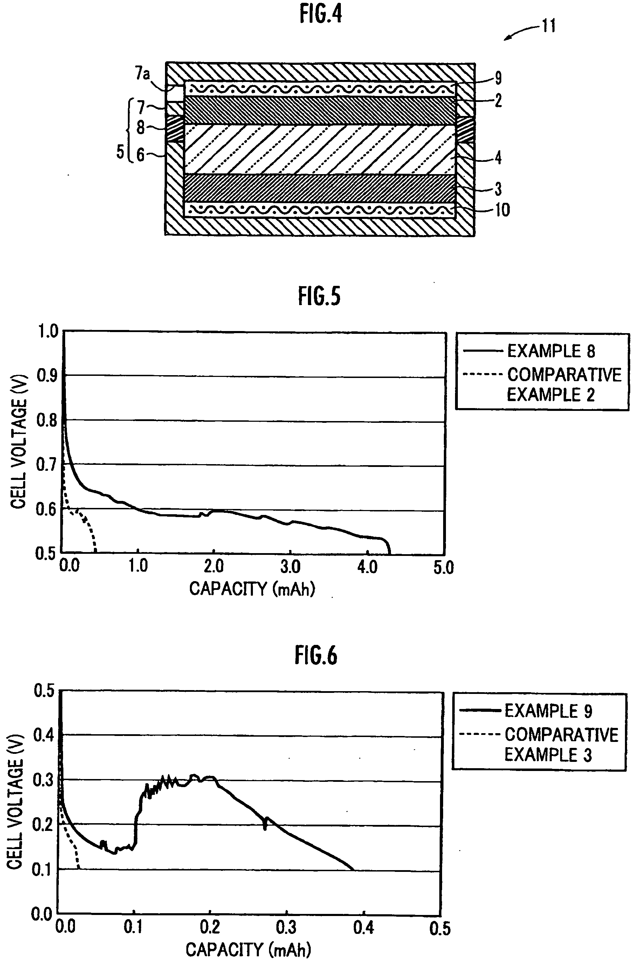

In the present Comparative Example, as shown in Fig. 4, a metal oxygen battery 11 was obtained wholly as in the above Example 1, except for using a lid body 7 having an air-introducing hole 7a of 3 mm in diameter in the side wall. In the metal oxygen battery 11, the positive electrode 2 was opened to the atmosphere through the air-introducing hole 7a.

Then, a relationship between the cell voltage and the capacity during discharge was measured wholly as in Example I, except for using the metal oxygen battery 11 obtained in the present Comparative Example. The result is shown in Fig. 2.

Then, a relationship between the cell voltage and the capacity during charge was measured wholly as in Example 1, except for using the metal oxygen battery 11 obtained in the present Comparative Example. The result is shown in Fig. 3.

From Fig. 2, it is clear that the metal oxygen batteries 1 (Examples 1 to 7) in which the positive electrode 2, the negative electrode 3 and the electrolyte layer 4 were hermetically housed had a larger discharge capacity and lower overvoltage than the metal oxygen battery 11 (Comparative Example 1) in which the positive electrode 2 was opened to the atmosphere.

Further, from Fig. 3, it is clear that the metal oxygen batteries 1 (Examples 1 to 7) has larger charge capacity than the metal oxygen battery 11 (Comparative Example 1). This is because, in the metal oxygen battery 11, the positive electrode 2 is opened to the atmosphere, so that the electrolyte solution evaporates and the cell reaction did not progress further.

### [Example 8]

In the present Example, a metal oxygen battery 1 shown in Fig. 1 was obtained wholly as in Example 1, except for using metallic zinc for the negative electrode 3, using an aluminum mesh for the positive electrode current collector 9, and using a KOH solution of a concentration of 1 mol/l as an electrolyte solution.

Then, a relationship between the cell voltage and the capacity during discharge was measured wholly as in Example 1, except for using the metal oxygen battery 1 obtained in the present Example. The result is shown in Fig. 5.

### [Comparative Example 2]

In the present Comparative Example, a metal oxygen battery 11 shown in Fig. 4 was obtained wholly as in Comparative Example 1, except for using metallic zinc for the negative electrode 3, using an aluminum mesh for the positive electrode current collector 9, and using a KOH solution of a concentration of 1 mol/l as an electrolyte solution.

Then, a relationship between the cell voltage and the capacity during discharge was measured wholly as in Example 1, except for using the metal oxygen battery 11 obtained in the present Comparative Example. The result is shown in Fig. 5.

From Fig. 5, it is clear also in the case of using metallic zinc for the negative electrode 3 that the metal oxygen battery 1 (Example 8) in which the positive electrode 2, the negative electrode 3 and the electrolyte layer 4 were hermetically housed had a larger discharge capacity and lower overvoltage than the metal oxygen battery 11 (Comparative Example 2) in which the positive electrode 2 was opened to the atmosphere. It is conceived that this is because, in the metal oxygen battery 11, the positive electrode 2 is opened to the atmosphere, so that the cell reaction does not progress further by receiving influences from not only the evaporation of the electrolyte solution, but also the decomposition of the electrolyte solution by the water or carbon dioxide in the atmosphere, and the like.

### [Example 9]

In the present Example, a metal oxygen battery 1 shown in Fig. 1 was obtained wholly as in Example 1, except for using metallic iron for the negative electrode 3, using an aluminum mesh for the positive electrode current collector 9, and using a KOH solution of a concentration of 1 mol/l as an electrolyte solution.

Then, a relationship between the cell voltage and the capacity during discharge was measured wholly as in Example 1, except for using the metal oxygen battery 1 obtained in the present Example. The result is shown in Fig. 6.

### [Comparative Example 3]

In the present Comparative Example, a metal oxygen battery 11 shown in Fig. 4 was obtained wholly as in Comparative Example 1, except for using metallic iron for the negative electrode 3, using aluminum mesh for the positive electrode current collector 9, and using a KOH solution of a concentration of 1 mol/l as an electrolyte solution.

Then, a relationship between the cell voltage and the capacity during discharge was measured wholly as in Example 1, except for using the metal oxygen battery 11 obtained in the present Comparative Example. The result is shown in Fig. 6.

From Fig. 6, it is clear also in the case of using metallic iron for the negative electrode 3 that the metal oxygen battery 1 (Example 9) in which the positive electrode 2, the negative electrode 3 and the electrolyte layer 4 were hermetically housed had a larger discharge capacity and lower overvoltage than the metal oxygen battery 11 (Comparative Example 3) in which the positive electrode 2 was opened to the atmosphere.

### [Example 10]

In the present Example, a metal oxygen battery 1 shown in Fig. 1 was obtained wholly as in Example 1, except for using a Li-In alloy (molar ratio of 1:1) for the negative electrode 3, and using an aluminum mesh for the positive electrode current collector 9.

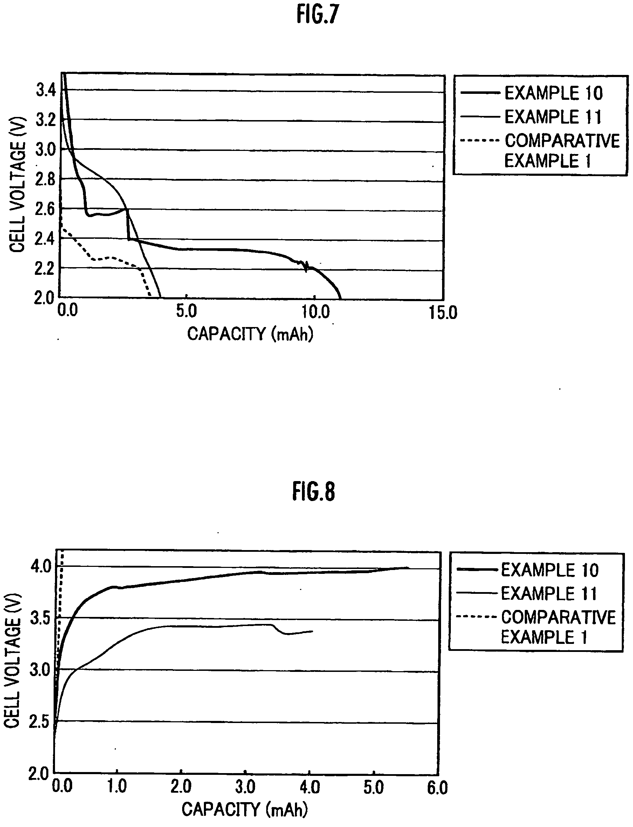

Then, a relationship between the cell voltage and the capacity during discharge was measured wholly as in Example 1, except for using the metal oxygen battery 1 obtained in the present Example. The result is shown in Fig. 7 together with the result of Comparative Example 1.

Then, a relationship between the cell voltage and the capacity during charge was measured wholly as in Example 1, except for using the metal oxygen battery 1 obtained in the present Example, and carrying out the charge until the cell voltage reached 4.1 V. The result is shown in Fig. 8 together with the result of Comparative Example 1.

### [Example 11]

In the present Example, a metal oxygen battery 1 shown in Fig. 1 was obtained wholly as in Example 1, except for using a material composed of 90 parts by mass of Si as an active substance, 5 parts by mass of Ketjen black (made by Lion Corp.) as a conductive auxiliary and 5 parts by mass of a polyimide as a binder, and having Li ions intercalated therein in advance, for the negative electrode 3, and using an aluminum mesh for the positive electrode current collector 9.

Then, a relationship between the cell voltage and the capacity during discharge was measured wholly as in Example 1, except for using the metal oxygen battery 1 obtained in the present Example. The result is shown in Fig. 7.

Then, a relationship between the cell voltage and the capacity during charge was measured wholly as in Example 1, except for using the metal oxygen battery 1 obtained in the present Example, and carrying out the charge until the cell voltage reached 4.1 V. The result is shown in Fig. 8.

From Fig. 7, it is clear also in the case of using the Li-In alloy or the Si having Li ions intercalated therein in advance for the negative electrode 3 that the metal oxygen batteries 1 (Examples 10 and 11) in which the positive electrode 2, the negative electrode 3 and the electrolyte layer 4 were hermetically housed had a larger discharge capacity and lower overvoltage than the metal oxygen battery 11 (Comparative Example 1) in which the positive electrode 2 was opened to the atmosphere.

Further, from Fig. 8, it is clear that the metal oxygen batteries 1 (Examples 10, 11) has larger charge capacity than the metal oxygen battery 11 (Comparative Example 1). It is conceived that this is because, in the metal oxygen battery 11, the positive electrode 2 is opened to the atmosphere, so that the cell reaction does not progress further by receiving influences from not only the evaporation of the electrolyte solution, but also the decomposition of the electrolyte solution by the water or carbon dioxide in the atmosphere, and the like.

### [Example 12]

In the present Example, a metal oxygen battery 1 shown in Fig. 1 was obtained wholly as in Example 1, except for using a material composed of 90 parts by mass of Li₄Ti₅O₁₂ as an active substance, 5 parts by mass of Ketjen black (made by Lion Corp.) as a conductive auxiliary and 5 parts by mass of a polytetrafluoroethylene (made by Daikin Industries, Ltd.) as a binder, for the negative electrode 3, and using an aluminum mesh for the positive electrode current collector 9.

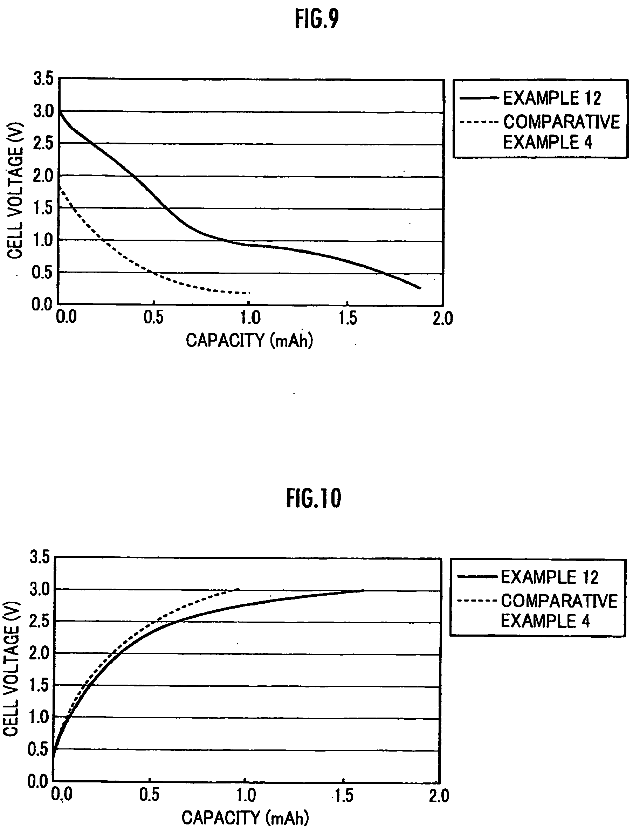

Then, a relationship between the cell voltage and the capacity during discharge was measured wholly as in Example 1, except for using the metal oxygen battery 1 obtained in the present Example. The result is shown in Fig. 9.

Then, a relationship between the cell voltage and the capacity during charge was measured wholly as in Example 1, except for using the metal oxygen battery 1 obtained in the present Example, and carrying out the charge until the cell voltage reached 4.1 V. The result is shown in Fig. 10.

### [Comparative Example 4]

In the present Comparative Example, a metal oxygen battery 11 shown in Fig. 4 was obtained wholly as in Comparative Example 1, except for using a material composed of 90 parts by mass of Li₄Ti₅O₁₂ as an active substance, 5 parts by mass of Ketjen black (made by Lion Corp.) as a conductive auxiliary and 5 parts by mass of a polytetrafluoroethylene (made by Daikin Industries, Ltd.) as a binder, for the negative electrode 3, and using an aluminum mesh for the positive electrode current collector 9.

Then, a relationship between the cell voltage and the capacity during discharge was measured wholly as in Example 1, except for using the metal oxygen battery 11 obtained in the present Comparative Example. The result is shown in Fig. 9.

Then, a relationship between the cell voltage and the capacity during charge was measured wholly as in Example 1, except for using the metal oxygen battery 11 obtained in the present Comparative Example, and carrying out the charge until the cell voltage reached 4.1 V. The result is shown in Fig. 10.

From Fig. 9, it is clear also in the case of using Li₄Ti₅O₁₂ for the negative electrode 3 that the metal oxygen battery 1 (Example 12) in which the positive electrode 2, the negative electrode 3 and the electrolyte layer 4 were hermetically housed had a larger discharge capacity and lower overvoltage than the metal oxygen battery 11 (Comparative Example 4) in which the positive electrode 2 was opened to the atmosphere.

Further, from Fig. 10, it is clear that the metal oxygen battery 1 (Example 12) has larger charge capacity than the metal oxygen battery 11 (Comparative Example 4). It is conceived that this is because, in the metal oxygen battery 11, the positive electrode 2 is opened to the atmosphere, so that the cell reaction does not progress further by receiving influences from not only the evaporation of the electrolyte solution, but also the decomposition of the electrolyte solution by the water or carbon dioxide in the atmosphere, and the like.

### [Example 13]

In the present Example, a metal oxygen battery 1 shown in Fig. 1 was obtained wholly as in Example 1, except for using an aluminum mesh for the positive electrode current collector 9, and pressure bonding the positive electrode material mixture at a pressure of 0.01 MPa to the positive electrode current collector 9 to thereby form the positive electrode 2. The positive electrode 2 thus obtained was confirmed to have a porosity of 96% by volume by the mercury intrusion method.

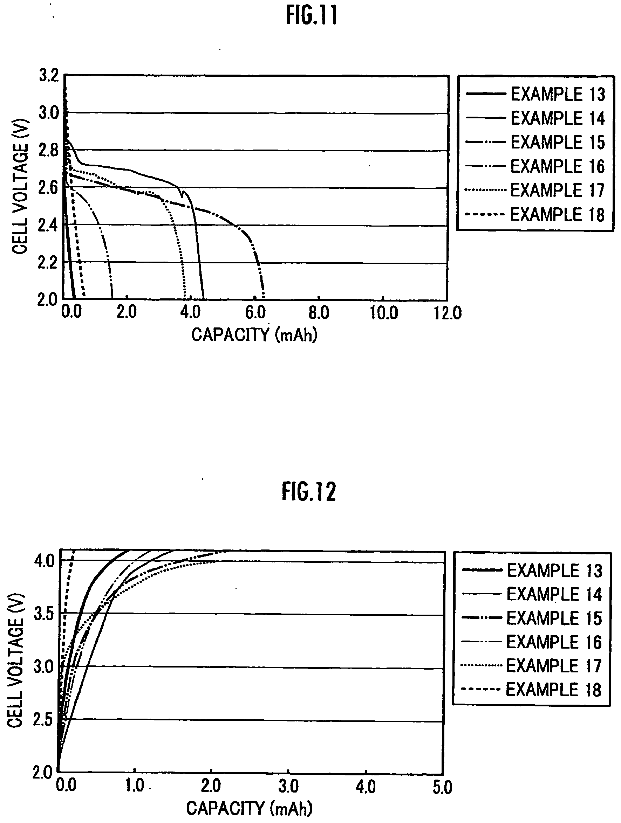

Then, a relationship between the cell voltage and the capacity during discharge was measured wholly as in Example 1, except for using the metal oxygen battery 1 obtained in the present Example. The result is shown in Fig. 11.

Then, a relationship between the cell voltage and the capacity during charge was measured wholly as in Example 1, except for using the metal oxygen battery 1 obtained in the present Example, and carrying out the charge until the cell voltage reached 4.1 V. The result is shown in Fig. 12.

### [Example 14]

In the present Example, a metal oxygen battery 1 shown in Fig. 1 was obtained wholly as in Example 1, except for using an aluminum mesh for the positive electrode current collector 9, and pressure bonding the positive electrode material mixture at a pressure of 0.05 MPa to the positive electrode current collector 9 to thereby form the positive electrode 2. The positive electrode 2 thus obtained was confirmed to have a porosity of 89% by volume by the mercury intrusion method.

Then, a relationship between the cell voltage and the capacity during discharge was measured wholly as in Example 1, except for using the metal oxygen battery 1 obtained in the present Example. The result is shown in Fig. 11.

Then, a relationship between the cell voltage and the capacity during charge was measured wholly as in Example 1, except for using the metal oxygen battery 1 obtained in the present Example, and carrying out the charge until the cell voltage reached 4.1 V. The result is shown in Fig. 12.

### [Example 15]

In the present Example, a metal oxygen battery 1 shown in Fig. 1 was obtained wholly as in Example 1, except for using an aluminum mesh for the positive electrode current collector 9, and pressure bonding the positive electrode material mixture at a pressure of 10 MPa to the positive electrode current collector 9 to thereby form the positive electrode 2. The positive electrode 2 thus obtained was confirmed to have a porosity of 35.3% by volume by the mercury intrusion method.

Then, a relationship between the cell voltage and the capacity during discharge was measured wholly as in Example 1, except for using the metal oxygen battery 1 obtained in the present Example. The result is shown in Fig. 11.

Then, a relationship between the cell voltage and the capacity during charge was measured wholly as in Example 1, except for using the metal oxygen battery 1 obtained in the present Example, and carrying out the charge until the cell voltage reached 4.1 V. The result is shown in Fig. 12.

### [Example 16]

In the present Example, a metal oxygen battery 1 shown in Fig. 1 was obtained wholly as in Example 1, except for using an aluminum mesh for the positive electrode current collector 9, and pressure bonding the positive electrode material mixture at a pressure of 20 MPa to the positive electrode current collector 9 to thereby form the positive electrode 2. The positive electrode 2 thus obtained was confirmed to have a porosity of 22.6% by volume by the mercury intrusion method.

Then, a relationship between the cell voltage and the capacity during discharge was measured wholly as in Example 1, except for using the metal oxygen battery 1 obtained in the present Example. The result is shown in Fig. 11.

Then, a relationship between the cell voltage and the capacity during charge was measured wholly as in Example 1, except for using the metal oxygen battery 1 obtained in the present Example, and carrying out the charge until the cell voltage reached 4.1 V. The result is shown in Fig. 12.

### [Example 17]

In the present Example, a metal oxygen battery 1 shown in Fig. 1 was obtained wholly as in Example 1, except for using an aluminum mesh for the positive electrode current collector 9, and pressure bonding the positive electrode material mixture at a pressure of 50 MPa to the positive electrode current collector 9 to thereby form the positive electrode 2. The positive electrode 2 thus obtained was confirmed to have a porosity of 11.2% by volume by the mercury intrusion method.

Then, a relationship between the cell voltage and the capacity during discharge was measured wholly as in Example 1, except for using the metal oxygen battery 1 obtained in the present Example. The result is shown in Fig. 11.

Then, a relationship between the cell voltage and the capacity during charge was measured wholly as in Example 1, except for using the metal oxygen battery 1 obtained in the present Example, and carrying out the charge until the cell voltage reached 4.1 V. The result is shown in Fig. 12.

### [Example 18]

In the present Example, a metal oxygen battery 1 shown in Fig. 1 was obtained wholly as in Example 1, except for using an aluminum mesh for the positive electrode current collector 9, and pressure bonding the positive electrode material mixture at a pressure of 100 MPa to the positive electrode current collector 9 to thereby form the positive electrode 2. The positive electrode 2 thus obtained was confirmed to have a porosity of 8.9% by volume by the mercury intrusion method.

Then, a relationship between the cell voltage and the capacity during discharge was measured wholly as in Example 1, except for using the metal oxygen battery 1 obtained in the present Example. The result is shown in Fig. 11.

Then, a relationship between the cell voltage and the capacity during charge was measured wholly as in Example 1, except for using the metal oxygen battery 1 obtained in the present Example, and carrying out the charge until the cell voltage reached 4.1 V. The result is shown in Fig. 12.

It is clear from Figs. 11 and 12 that the metal oxygen batteries 1 (Examples 14 to 17) in which the porosity of the positive electrode 2 was in the range of 10 to 90% by volume exhibited a better cell performance than the metal oxygen battery 1 (Example 18) in which the porosity was lower than 10% by volume or the metal oxygen battery 1 (Example 13) in which the porosity exceeded 90% by volume.

### [Example 19]

In the present Example, a metal oxygen battery 1 shown in Fig. 1 was obtained wholly as in Example 1, except for using an aluminum mesh for the positive electrode current collector 9, and using no Ketjen black at all as a conductive auxiliary and mixing 99 parts by mass of YMnO₃ and 1 part by mass of the polytetrafluoroethylene as a binder to thereby obtain a positive electrode material mixture.

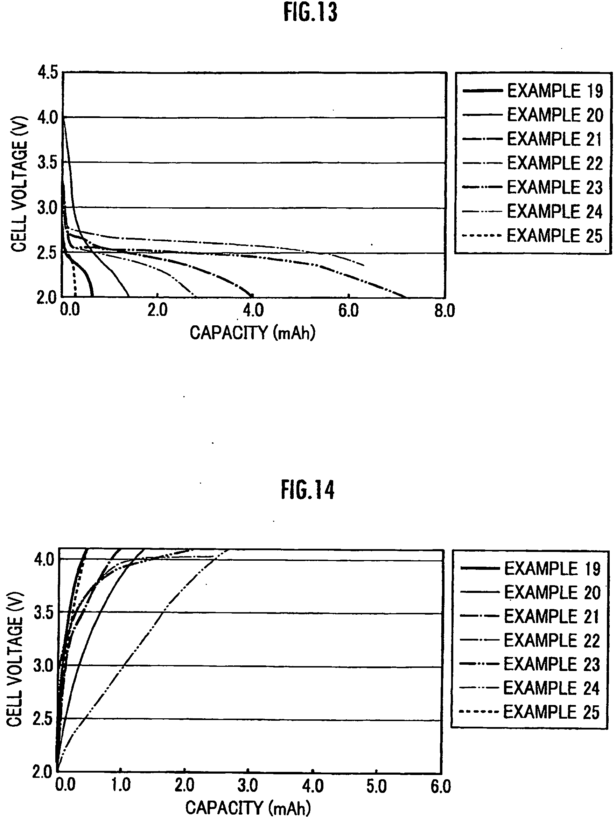

Then, a relationship between the cell voltage and the capacity during discharge was measured wholly as in Example 1, except for using the metal oxygen battery 1 obtained in the present Example. The result is shown in Fig. 13.

Then, a relationship between the cell voltage and the capacity during charge was measured wholly as in Example 1, except for using the metal oxygen battery 1 obtained in the present Example, and carrying out the charge until the cell voltage reached 4.1 V. The result is shown in Fig. 14.

### [Example 20]

In the present Example, a metal oxygen battery 1 shown in Fig. 1 was obtained wholly as in Example 1, except for using an aluminum mesh for the positive electrode current collector 9, and mixing 95 parts by mass of YMnO₃, 3 parts by mass of Ketjen black as a conductive auxiliary and 2 parts by mass of the polytetrafluoroethylene as a binder to thereby obtain a positive electrode material mixture.

Then, a relationship between the cell voltage and the capacity during discharge was measured wholly as in Example 1, except for using the metal oxygen battery 1 obtained in the present Example. The result is shown in Fig. 13.

Then, a relationship between the cell voltage and the capacity during charge was measured wholly as in Example 1, except for using the metal oxygen battery 1 obtained in the present Example, and carrying out the charge until the cell voltage reached 4.1 V. The result is shown in Fig. 14.

### [Example 21]

In the present Example, a metal oxygen battery 1 shown in Fig. 1 was obtained wholly as in Example 1, except for using an aluminum mesh for the positive electrode current collector 9, and mixing 90 parts by mass of YMnO₃, 5 parts by mass of Ketjen black as a conductive auxiliary and 5 parts by mass of the polytetrafluoroethylene as a binder to thereby obtain a positive electrode material mixture.

Then, a relationship between the cell voltage and the capacity during discharge was measured wholly as in Example 1, except for using the metal oxygen battery 1 obtained in the present Example. The result is shown in Fig. 13.

Then, a relationship between the cell voltage and the capacity during charge was measured wholly as in Example 1, except for using the metal oxygen battery 1 obtained in the present Example, and carrying out the charge until the cell voltage reached 4.1 V. The result is shown in Fig. 14.

### [Example 22]

In the present Example, a metal oxygen battery 1 shown in Fig. 1 was obtained wholly as in Example 1, except for using an aluminum mesh for the positive electrode current collector 9, and mixing 80 parts by mass of YMnO₃, 10 parts by mass of Ketjen black as a conductive auxiliary and 10 parts by mass of the polytetrafluoroethylene as a binder to thereby obtain a positive electrode material mixture.

Then, a relationship between the cell voltage and the capacity during discharge was measured wholly as in Example 1, except for using the metal oxygen battery 1 obtained in the present Example. The result is shown in Fig. 13.

Then, a relationship between the cell voltage and the capacity during charge was measured wholly as in Example 1, except for using the metal oxygen battery 1 obtained in the present Example, and carrying out the charge until the cell voltage reached 4.1 V. The result is shown in Fig. 14.

### [Example 23]

In the present Example, a metal oxygen battery 1 shown in Fig. 1 was obtained wholly as in Example 1, except for using an aluminum mesh for the positive electrode current collector 9, and mixing 40 parts by mass of YMnO₃, 50 parts by mass of Ketjen black as a conductive auxiliary and 10 parts by mass of the polytetrafluoroethylene as a binder to thereby obtain a positive electrode material mixture.

Then, a relationship between the cell voltage and the capacity during discharge was measured wholly as in Example 1, except for using the metal oxygen battery 1 obtained in the present Example. The result is shown in Fig. 13.

Then, a relationship between the cell voltage and the capacity during charge was measured wholly as in Example 1, except for using the metal oxygen battery 1 obtained in the present Example, and carrying out the charge until the cell voltage reached 4.1 V. The result is shown in Fig. 14.

### [Example 24]

In the present Example, a metal oxygen battery 1 shown in Fig. 1 was obtained wholly as in Example 1, except for using an aluminum mesh for the positive electrode current collector 9, and mixing 5 parts by mass of YMnO₃, 85 parts by mass of Ketjen black as a conductive auxiliary and 10 parts by mass of the polytetrafluoroethylene as a binder to thereby obtain a positive electrode material mixture.

Then, a relationship between the cell voltage and the capacity during discharge was measured wholly as in Example 1, except for using the metal oxygen battery 1 obtained in the present Example. The result is shown in Fig. 13.

Then, a relationship between the cell voltage and the capacity during charge was measured wholly as in Example 1, except for using the metal oxygen battery 1 obtained in the present Example, and carrying out the charge until the cell voltage reached 4.1V. The result is shown in Fig. 14.

### [Example 25]

In the present Example, a metal oxygen battery 1 shown in Fig. 1 was obtained wholly as in Example 1, except for using an aluminum mesh for the positive electrode current collector 9, and mixing 1 part by mass of YMnO₃, 89 parts by mass of Ketjen black as a conductive auxiliary and 10 parts by mass of the polytetrafluoroethylene as a binder to thereby obtain a positive electrode material mixture.

Then, a relationship between the cell voltage and the capacity during discharge was measured wholly as in Example 1, except for using the metal oxygen battery 1 obtained in the present Example. The result is shown in Fig. 13.

Then, a relationship between the cell voltage and the capacity during charge was measured wholly as in Example 1, except for using the metal oxygen battery 1 obtained in the present Example, and carrying out the charge until the cell voltage reached 4.1 V. The result is shown in Fig. 14.

It is clear from Figs. 13 and 14 that the metal oxygen batteries 1 (Examples 20 to 24) containing YMnO₃ in the range of 5 to 95 parts by mass based on the whole of the positive electrode material mixture exhibited a better cell performance than the metal oxygen battery I (Example 19) containing YMnO₃ exceeding 95 parts by mass, or the metal oxygen battery 1 (Example 25) containing YMnO₃ less than 5 parts by mass.

### [Example 26]

In the present Example, a metal oxygen battery 1 shown in Fig. 1 was obtained wholly as in Example 1, except for using propylene carbonate as a nonaqueous solvent for the electrolyte solution.

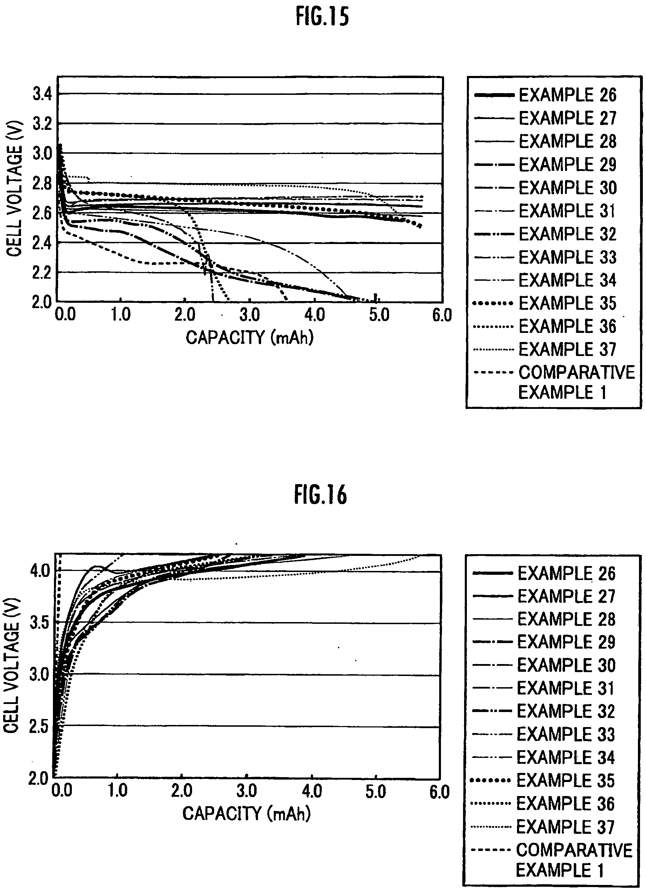

Then, a relationship between the cell voltage and the capacity during discharge was measured wholly as in Example 1, except for using the metal oxygen battery 1 obtained in the present Example, and carrying out the discharge until the cell voltage reached 2.0 V or the discharge capacity reached 6 mAh. The result is shown in Fig. 15.

Then, a relationship between the cell voltage and the capacity during charge was measured wholly as in Example 1, except for using the metal oxygen battery 1 obtained in the present Example, and carrying out the charge until the cell voltage reached 4.1 V. The result is shown in Fig. 16.

### [Example 27]

In the present Example, a metal oxygen battery 1 shown in Fig. 1 was obtained wholly as in Example 1, except for using a mixed solution of 70 parts by mass of propylene carbonate and 30 parts by mass of dimethyl carbonate as a nonaqueous solvent for the electrolyte solution.

Then, a relationship between the cell voltage and the capacity during discharge was measured wholly as in Example 1, except for using the metal oxygen battery 1 obtained in the present Example, and carrying out the discharge until the cell voltage reached 2.0 V or the discharge capacity reached 6 mAh. The result is shown in Fig. 15.

Then, a relationship between the cell voltage and the capacity during charge was measured wholly as in Example 1, except for using the metal oxygen battery 1 obtained in the present Example, and carrying out the charge until the cell voltage reached 4.1 V. The result is shown in Fig. 16.

### [Example 28]

In the present Example, a metal oxygen battery 1 shown in Fig. 1 was obtained wholly as in Example 1, except for using a mixed solution of 70 parts by mass of propylene carbonate and 30 parts by mass of diethyl carbonate as a nonaqueous solvent for the electrolyte solution.

Then, a relationship between the cell voltage and the capacity during discharge was measured wholly as in Example 1, except for using the metal oxygen battery 1 obtained in the present Example, and carrying out the discharge until the cell voltage reached 2.0 V or the discharge capacity reached 6 mAh. The result is shown in Fig. 15.

Then, a relationship between the cell voltage and the capacity during charge was measured wholly as in Example 1, except for using the metal oxygen battery 1 obtained in the present Example, and carrying out the charge until the cell voltage reached 4.1 V. The result is shown in Fig. 16.

### [Example 29]

In the present Example, a metal oxygen battery 1 shown in Fig. 1 was obtained wholly as in Example 1, except for using a mixed solution of 50 parts by mass of propylene carbonate and 50 parts by mass of dimethyl carbonate as a nonaqueous solvent for the electrolyte solution.

Then, a relationship between the cell voltage and the capacity during discharge was measured wholly as in Example 1, except for using the metal oxygen battery 1 obtained in the present Example, and carrying out the discharge until the cell voltage reached 2.0 V or the discharge capacity reached 6 mAh. The result is shown in Fig. 15.

Then, a relationship between the cell voltage and the capacity during charge was measured wholly as in Example 1, except for using the metal oxygen battery 1 obtained in the present Example, and carrying out the charge until the cell voltage reached 4.1 V. The result is shown in Fig. 16.

### [Example 30]

In the present Example, a metal oxygen battery 1 shown in Fig. 1 was obtained wholly as in Example 1, except for using a mixed solution of 50 parts by mass of propylene carbonate and 50 parts by mass of diethyl carbonate as a nonaqueous solvent for the electrolyte solution.

Then, a relationship between the cell voltage and the capacity during discharge was measured wholly as in Example 1, except for using the metal oxygen battery 1 obtained in the present Example, and carrying out the discharge until the cell voltage reached 2.0 V or the discharge capacity reached 6 mAh. The result is shown in Fig. 15.

Then, a relationship between the cell voltage and the capacity during charge was measured wholly as in Example 1, except for using the metal oxygen battery 1 obtained in the present Example, and carrying out the charge until the cell voltage reached 4.1 V. The result is shown in Fig. 16.

### [Example 31]

In the present Example, a metal oxygen battery 1 shown in Fig. 1 was obtained wholly as in Example 1, except for using a mixed solution of 30 parts by mass of propylene carbonate and 70 parts by mass of dimethyl carbonate as a nonaqueous solvent for the electrolyte solution.

Then, a relationship between the cell voltage and the capacity during discharge was measured wholly as in Example 1, except for using the metal oxygen battery 1 obtained in the present Example, and carrying out the discharge until the cell voltage reached 2.0 V or the discharge capacity reached 6 mAh. The result is shown in Fig. 15.

Then, a relationship between the cell voltage and the capacity during charge was measured wholly as in Example 1, except for using the metal oxygen battery 1 obtained in the present Example, and carrying out the charge until the cell voltage reached 4.1 V. The result is shown in Fig. 16,

### [Example 32]

In the present Example, a metal oxygen battery 1 shown in Fig. 1 was obtained wholly as in Example 1, except for using a mixed solution of 30 parts by mass of propylene carbonate and 70 parts by mass of diethyl carbonate as a nonaqueous solvent for the electrolyte solution.

Then, a relationship between the cell voltage and the capacity during discharge was measured wholly as in Example 1, except for using the metal oxygen battery 1 obtained in the present Example, and carrying out the discharge until the cell voltage reached 2.0 V or the discharge capacity reached 6 mAh. The result is shown in Fig. 15.

Then, a relationship between the cell voltage and the capacity during charge was measured wholly as in Example 1, except for using the metal oxygen battery 1 obtained in the present Example, and carrying out the charge until the cell voltage reached 4.1 V. The result is shown in Fig. 16.

### [Example 33]

In the present Example, a metal oxygen battery 1 shown in Fig. 1 was obtained wholly as in Example 1, except for using a mixed solution of 70 parts by mass of ethylene carbonate and 30 parts by mass of dimethyl carbonate as a nonaqueous solvent for the electrolyte solution.

Then, a relationship between the cell voltage and the capacity during discharge was measured wholly as in Example 1, except for using the metal oxygen battery 1 obtained in the present Example, and carrying out the discharge until the cell voltage reached 2.0 V or the discharge capacity reached 6 mAh. The result is shown in Fig. 15.

Then, a relationship between the cell voltage and the capacity during charge was measured wholly as in Example 1, except for using the metal oxygen battery 1 obtained in the present Example, and carrying out the charge until the cell voltage reached 4.1 V. The result is shown in Fig. 16.

### [Example 34]

In the present Example, a metal oxygen battery 1 shown in Fig. 1 was obtained wholly as in Example 1, except for using a mixed solution of 70 parts by mass of ethylene carbonate and 30 parts by mass of diethyl carbonate as a nonaqueous solvent for the electrolyte solution.

Then, a relationship between the cell voltage and the capacity during discharge was measured wholly as in Example 1, except for using the metal oxygen battery 1 obtained in the present Example, and carrying out the discharge until the cell voltage reached 2.0 V or the discharge capacity reached 6 mAh. The result is shown in Fig. 15.

Then, a relationship between the cell voltage and the capacity during charge was measured wholly as in Example 1, except for using the metal oxygen battery 1 obtained in the present Example, and carrying out the charge until the cell voltage reached 4.1 V. The result is shown in Fig. 16.

### [Example 35]

In the present Example, a metal oxygen battery 1 shown in Fig. 1 was obtained wholly as in Example 1, except for using a mixed solution of 50 parts by mass of ethylene carbonate and 50 parts by mass of dimethyl carbonate as a nonaqueous solvent for the electrolyte solution.

Then, a relationship between the cell voltage and the capacity during discharge was measured wholly as in Example 1, except for using the metal oxygen battery 1 obtained in the present Example, and carrying out the discharge until the cell voltage reached 2.0 V or the discharge capacity reached 6 mAh. The result is shown in Fig. 15,

Then, a relationship between the cell voltage and the capacity during charge was measured wholly as in Example 1, except for using the metal oxygen battery 1 obtained in the present Example, and carrying out the charge until the cell voltage reached 4.1 V. The result is shown in Fig. 16.

### [Example 36]

In the present Example, a metal oxygen battery 1 shown in Fig. 1 was obtained wholly as in Example 1, except for using a mixed solution of 30 parts by mass of ethylene carbonate and 70 parts by mass of dimethyl carbonate as a nonaqueous solvent for the electrolyte solution.

Then, a relationship between the cell voltage and the capacity during discharge was measured wholly as in Example 1, except for using the metal oxygen battery 1 obtained in the present Example, and carrying out the discharge until the cell voltage reached 2.0 V or the discharge capacity reached 6 mAh. The result is shown in Fig. 15.

Then, a relationship between the cell voltage and the capacity during charge was measured wholly as in Example 1, except for using the metal oxygen battery 1 obtained in the present Example, and carrying out the charge until the cell voltage reached 4.1 V. The result is shown in Fig. 16.

### [Example 37]

In the present Example, a metal oxygen battery 1 shown in Fig. 1 was obtained wholly as in Example 1, except for using a mixed solution of 30 parts by mass of ethylene carbonate and 70 parts by mass of diethyl carbonate as a nonaqueous solvent for the electrolyte solution.

Then, a relationship between the cell voltage and the capacity during discharge was measured wholly as in Example 1, except for using the metal oxygen battery 1 obtained in the present Example, and carrying out the discharge until the cell voltage reached 2.0 V or the discharge capacity reached 6 mAh. The result is shown in Fig. 15.

Then, a relationship between the cell voltage and the capacity during charge was measured wholly as in Example 1, except for using the metal oxygen battery 1 obtained in the present Example, and carrying out the charge until the cell voltage reached 4.1 V. The result is shown in Fig. 16.

It is clear from Figs. 15 and 16 that the metal oxygen batteries 1 (Examples 26 to 37), which used, as their nonaqueous solvents for the electrolyte solutions, propylene carbonate singly, a mixed solution of 30 to 70 parts by mass of propylene carbonate and 30 to 70 parts by mass of dimethyl carbonate or diethyl carbonate, or a mixed solution of 30 to 70 parts by mass of ethylene carbonate and 30 to 70 parts by mass of dimethyl carbonate or diethyl carbonate, could provide an excellent cell performance.

### Reference Signs List

1...metal oxygen battery, 2... positive electrode, 3... negative electrode, 4...electrolyte layer, 5... case.

## Claims

1. A metal oxygen battery, comprising:
a positive electrode to which oxygen is applied as an active substance;
a negative electrode to which a metal is applied as an active substance;
an electrolyte layer disposed between the positive electrode and the negative electrode; and
a case hermetically housing the positive electrode, the negative electrode and the electrolyte layer,
wherein the positive electrode comprises an oxygen-storing material comprising a catalyst function with respect to a cell reaction, and a function of, during discharge, ionizing oxygen and binding the oxygen with metal ions transferring from the negative electrode through the electrolyte layer to the positive electrode to thereby form a metal oxide, and during charge, reducing the metal oxide and storing oxygen, and
wherein the oxygen-storing material comprises one composite metal oxide selected from a group consisting of YMnO₃, CuFeO₂, LaMnO₃, and LaSiO₃.

2. The metal oxygen battery according to claim 1, wherein the positive electrode comprises the composite metal oxide in the range of 5 to 95% by mass of the whole of the positive electrode.

3. The metal oxygen battery according to claim 1 or 2, wherein the positive electrode comprises the oxygen-storing material and a conductive auxiliary having an electron conductivity.

4. The metal oxygen battery according to any one of claims 1 to 3, wherein the positive electrode comprises a porous body having a porosity of 10 to 90% by volume.

5. The metal oxygen battery according to any one of claims 1 to 4, wherein the negative electrode comprises one metal selected from a group consisting of Li, Zn, Al, Mg, Fe, Ca, and Na, an alloy thereof, an organometallic compound containing the metal, or an organic complex of the metal.

## Patentansprüche

1. Metall-Sauerstoff-Batterie umfassend:
eine positive Elektrode an der Sauerstoff als ein aktiver Stoff eingesetzt wird;
eine negative Elektrode an der ein Metall als ein aktiver Stoff eingesetzt wird;
eine Elektrolytschicht, die zwischen der positiven Elektrode und der negativen Elektrode angeordnet ist; und
ein Gehäuse, das die positive Elektrode, die negative Elektrode und die Elektrolytschicht hermetisch umschließt,
wobei die positive Elektrode ein Sauerstoff-speicherndes Material umfasst, welches eine Katalystorfunktion in Bezug auf die Zellreaktion und eine Funktion, während Entladung, zum Ionisieren von Sauerstoff und Binden des Sauerstoffs mit Metallionen, die von der negativen Elektrode durch die Elektrolytschicht zu der positiven Elektrode wandern, um so ein Metalloxid zu bilden und während Aufladung, zum Reduzieren des Metalloxids und Speichern von Sauerstoff umfasst, und
wobei das Sauerstoff-speichernde Material ein zusammengesetztes Metalloxid ausgewählt aus der Gruppe bestehend aus YMnO₃, CuFeO₂, LaMnO₃ und LaSiO₃ umfasst.

2. Metall-Sauerstoff-Batterie nach Anspruch 1, wobei die positive Elektrode das zusammengesetzte Metalloxid im Bereich von 5 bis 95 Massen-% bezogen auf die ganze positive Elektrode umfasst.

3. Metall-Sauerstoff-Batterie nach Anspruch 1 oder 2, wobei die positive Elektrode das Sauerstoff-speichernde Material und einen leitenden Hilfsstoff, der eine Elektronenleitfähigkeit aufweist, umfasst.

4. Metall-Sauerstoff-Batterie nach einem der Ansprüche 1 bis 3, wobei die positive Elektrode einen porösen Körper, der eine Porösität von 10 bis 90 Volumen-% aufweist, umfasst.

5. Metall-Sauerstoff-Batterie nach einem der Ansprüche 1 bis 4, wobei die negative Elektrode ein Metall ausgewählt aus der Gruppe bestehend aus Li, Zn, Al, Mg, Fe, Ca und Na, eine Legierung davon, eine organometallische Verbindung, die das Metall enthält oder einen organischen Komplex des Metalls umfasst.

## Revendications

1. Batterie métal-oxygène, comprenant :
une électrode positive à laquelle de l'oxygène est appliqué en tant que substance active ;
une électrode négative à laquelle un métal est appliqué en tant que substance active ;
une couche d'électrolyte disposée entre l'électrode positive et l'électrode négative ; et
un boîtier enfermant hermétiquement l'électrode positive, l'électrode négative et la couche d'électrolyte,
dans laquelle l'électrode positive comprend un matériau stockant de l'oxygène réalisant une fonction de catalyseur vis-à-vis d'une réaction de cellule et une fonction, pendant la décharge, d'ionisation de l'oxygène et de liaison de l'oxygène avec les ions métalliques se transférant depuis l'électrode négative à travers la couche d'électrolyte jusqu'à l'électrode positive pour former ainsi un oxyde de métal et, pendant la charge, de réduction de l'oxyde de métal et de stockage d'oxygène, et
dans laquelle le matériau stockant de l'oxygène comprend un oxyde de métal composite choisi dans un groupe constitué par YMnO₃, CuFeO₂, LaMnO₃ et LaSi0O.

2. Batterie métal-oxygène selon la revendication 1, dans laquelle l'électrode positive comprend l'oxyde de métal composite dans la gamme de 5 à 95 % en masse de l'ensemble de l'électrode positive.

3. Batterie métal-oxygène selon la revendication 1 ou 2, dans laquelle l'électrode positive comprend le matériau stockant de l'oxygène et un auxiliaire conducteur ayant une conductivité électronique.

4. Batterie métal-oxygène selon l'une quelconque des revendications 1 à 3, dans laquelle l'électrode positive comprend un corps poreux ayant une porosité de 10 à 90 % en volume.

5. Batterie métal-oxygène selon l'une quelconque des revendications 1 à 4, dans laquelle l'électrode négative comprend un métal choisi dans un groupe constitué par Li, Zn, Al, Mg, Fe, Ca et Na, un alliage de ceux-ci, un composé organométallique contenant le métal, ou un complexe organique du métal.
